# EUROPEAN PATENT SPECIFICATION

(11) **EP 1 022 511 B1**
(45) Date of publication and mention of the grant of the patent: **22.03.2006**
(21) Application number: 99122281.1
(22) Date of filing: 09.11.1999
(51) Int. Cl.: F21V 8/00

(54) **Improvements relating to lighting units**
Verbesserungen für Beleuchtungseinheiten
Améliorations relatives aux unités d'éclairage

(30) Priority: 23.01.1999 GB 9901409
(43) Date of publication of application: 26.07.2000
(73) Proprietor: Schott AG, 55122 Mainz (DE)
(72) Inventor: Lovel, Nigel, Intake, Doncaster DN2 5HD (GB); Willis, Charles Henry Hurst, Doncaster (GB)
(74) Representative: Denmark, James

(56) References cited:
- EP-A- 0 657 685
- GB-A- 2 298 055

## Description

This invention relates to lighting units of the type which includes a light transmission optical cable. By an optical cable is intended a fibre optic cable which may comprise a multiplicity of optical fibres grouped in any configuration, or a single large diameter light transmitting rod.

Optical fibres can be grouped in bundles and these bundles are used to make fibre optic harnesses. A fibre optic harness comprises a plurality of bundles which are bunched together at one end (the common end) into a single face so that fibres can be presented to a common light source. The bundles are not so grouped at their other ends and are left free to become "tails". Fibre optic harnesses are used as will be appreciated for the transmission and distribution of light, in that a light source can be positioned at the common end and light will be transmitted to the tail ends of the bundles, effecting the distribution of light. Light sources can also be located at the tail ends and light will then be transmitted and concentrated at the common end.

When a lighting unit is set up, it is usual to make it permanent in that when the optical cable has been positioned to perform its light distribution function, it is undesirable that its position should be changed. Referring to British Patent Application GB 2298055, an arrangement is set forth whereby the maintenance and repair of a light source in a light transmission means is simplified, by providing the light source and power supply connection in a removable unit from a fixed mounting. The fixed mounting comprises a base and a front face with an aperture into which the optical cable is fitted. The removable unit is located onto the mounting, thereby allowing alignment of the light source with the optical cable.

It is often desirable for the light source and power supply in the lighting unit to be hidden from view, so as not to look unsightly and not detract aesthetic appeal from areas or objects being illuminated. In addition, space for the lighting unit is often limited, thereby resulting in the apparatus being placed in a confined space. For example, in showcase illumination the lighting unit is usually placed in a drawer underneath the showcase with only the tail end portions of the fibres entering the showcase itself. Since cool air can not circulate efficiently in such confined spaces there is a risk of the lighting unit becoming too hot and resulting in a fire hazard. Air cooling means is usually provided in the unit, supplied by air from outside the confined area, to overcome this problem.

The present invention provides a novel arrangement of the light transmission means described in the above application.

The present invention is defined in the appended claims.

Preferably, the other part of the casing also carries an electrically driven fan for passing cooling air over the light source, and the said other part of the plug and socket connection is also electrically connected to the fan for driving the same.

Preferably also, the said one part of the casing carries one end of an air duct, and the fan is arranged to draw air from a remote location through the duct, into the casing and pass it over the light source.

A particularly convenient arrangement is achieved in that the cable, the one part of the plug and socket connection, and air duct can remain in position, whilst the other section of the casing carrying the fan, the light source, and the other part of the plug and socket connection is removed, for example for maintenance and/or repair.

An embodiment of the present invention will now be described, by way of example, with reference to the accompanying drawings, wherein:-
Figure 1 is a perspective view from a first angle of a lighting unit according to the embodiment of the invention;
Figure 2 is a perspective view from another angle of the lighting unit shown in Figure 1 with the two sections of the unit casing partially separated;

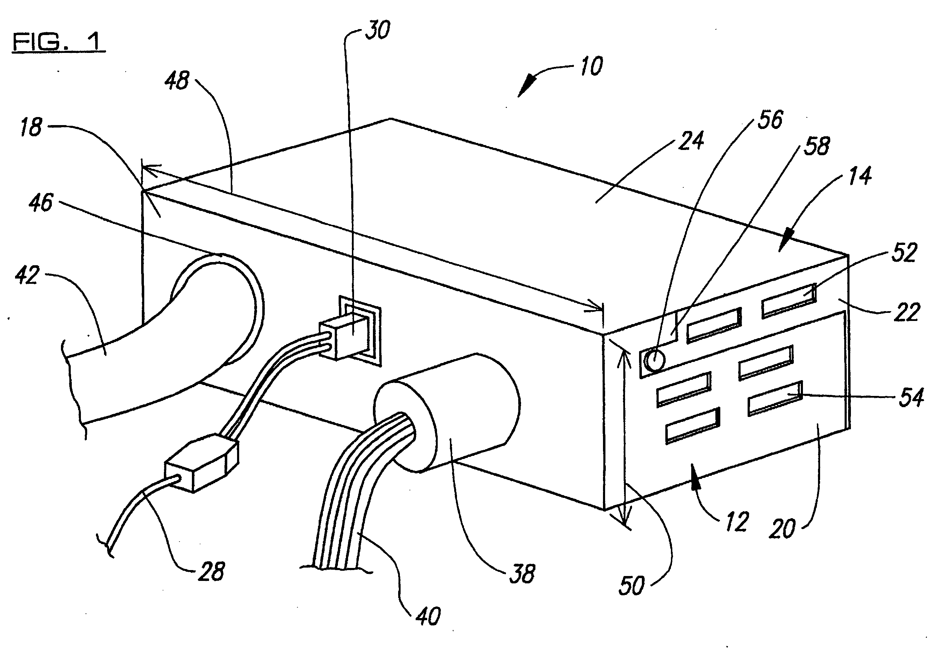

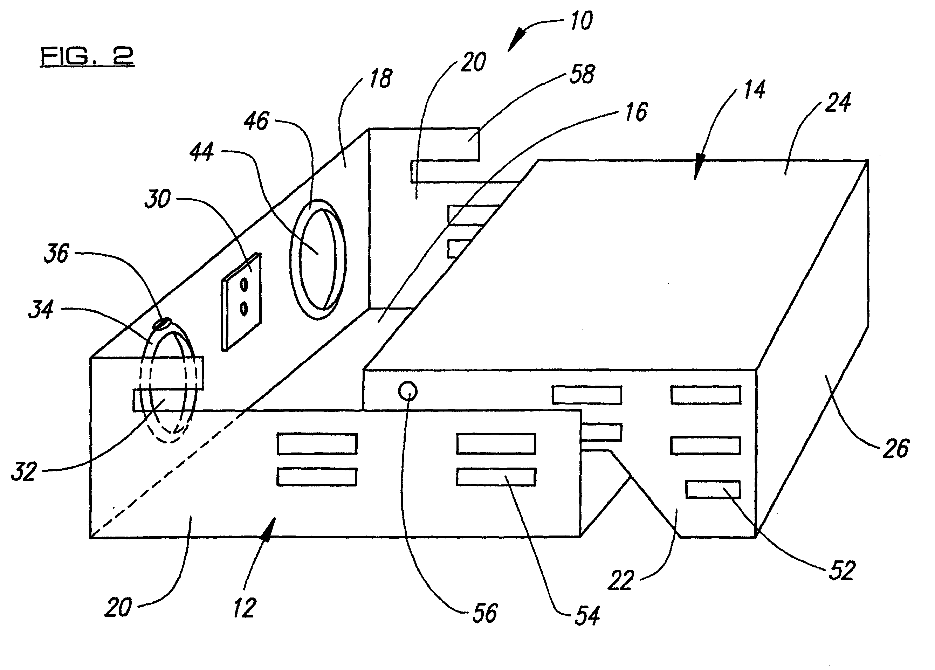

Referring to Figures 1 and 2, there is illustrated a lighting unit comprising a casing 10 having two sections 12 and 14; section 12 having a base portion 16, front portion 18 and side portions 20, and section 14 having sides walls 22, top portion 24 and back portion 26.

Section 14 contains electrical components which are supplied with power through an electric lead 28 via a plug and socket connection, of which one part of the plug and socket connection 30 is carried by section 12 at one end of the lead, and the other part of the plug and socket connection (not shown) is carried by section 14. The other end of the electric lead 28 is connected to the mains via a mains plug (not shown).

Section 14 contains a light source (not shown) which is mounted so as to project its directed beam to and through an aperture 32 on section 12. The aperture 32 is surrounded by a collar 34. The collar 34 has a radial bore which receives a locking screw 36 which can be turned to anchor the common end 38 of an optical light transmitting cable 40, which end 38 is located in the collar 34. The common end 38 of optical light transmitting cable 40 receives light from the source and transmits it to the other end of the cable (not shown) remote from the casing.

In order to release the common end 38 from the collar therefore, it is simply a matter of loosening the screw 36 and pulling the common end 38 from the collar 34. In practise however, once a common end has been positioned, it is unusual for the position to require adjustment, although the other end of the optical light transmitting cable may be adjusted to direct the light issuing therefrom to different locations.

Section 14 contains an electrically driven fan (not shown) which passes air through the casing 10 and over the light source. The fan draws air through an air duct 42, fitted to aperture 44 on section 12 by means of a collar 46. The air duct 42 enables the supply of cool air from a remote location to the casing 10 to prevent the light source from over heating. Both the light source and the fan are electrically connected to the other part of the plug and socket connection carried on section 14.

The embodiment illustrated in Figures 1 and 2 has the aperture 44 for the air duct 42, the plug and socket connection 30 for the power supply lead 28, and the aperture 32 for the common end 38 of the optical light transmitting cable 40 all located on the front portion 18 of section 12. This embodiment is most preferable since it limits the width and height of the casing 10 to the width 48 and the height 50 of section 12, thereby reducing the space required to house the casing 10. It is noted that the apertures 32 and 44 and plug and socket connection 30 could be located on side portions 20 or base portion 16 of section 12. However, this would result in either the height or width of the casing 10 being larger than the width 48 or height 50 of section 12, thereby resulting in a greater volume being required to house the casing 10.

The light source, fan and the related components such as a transformer, printed circuit board, and fuses and the like (not shown) contained in section 14 do require to be removed for replacement and repair occasionally. Having regard to the normal location of the assembly for use, it is not always easy to effect removal and or replacement of these components on site. Prior art systems have not addressed this problem effectively, and the present invention provides an improved arrangement to deal with this problem.

Section 14 is located on section 12 and can be separated easily. The two parts fit together by push fitting and no tools are required and the push fitting establishes the electrical connection of the means to the light source and fan. Section 12 can be fixed to an adjacent surface by screws so that the lighting unit will not move in use. Removing section 14 is simply a matter of pushing or pulling the section rearwardly from front portion 18 of section 12 so that any location means between section 14 and section 12 are detached. Section 14 is replaced in a similar manner but in the reverse direction.

The side walls 22 of section 14 and side portions 20 of section 12 have ventilation holes 52 and 54 respectively for cooling purposes. The ventilation holes 52 and 54 are aligned when section 14 is located on section 12. Alternatively, the warmed air can be ducted via an exit aperture (not shown) on section 12 similar to aperture 46, and said extra aperture is preferably located on front portion 18 of section 12.

Base portion 16 of section 12 can be provided with keyhole apertures (not shown) which can be connected to form a plug and keyhole connection via plugs (not shown) provided on a base of section 14. However, it is noted that the base portion of section 12 could contain the plugs and the base of section 14 could contain the apertures. Front portion 18 of section 12 can also be provided with a magnetic strip to hold a magnetic portion of section 12 firmly but releasably in place.

Section 14 can be provided with locating screws 56 on side walls 22 which are positioned under a shoulder portion 58 of side portions 20 when section 14 is located on section 12. When the lighting unit is operational, as in Figure 1, the power lead 28 is connected via one part of plug and socket connection 30 on section 12 to the other part of plug and socket connection on section 14, the light source in section 14 sends light to the common end 38 of optical cable 40, so that the tail ends remote from the casing 10 are illuminated and the air duct 42 provides cool air for the fan to pass over the light source.

## Claims

1. A lighting unit comprising a casing (10), a light source in the casing, an optical light transmitting cable (40) having one end (38) connected to the casing to receive light from the source and transmit it to the other end of the cable remote from the casing, a power supply means including a plug and socket electrical connection (30) of which one part is carried by the casing and is for connection to an electrical supply, and the other part is connected to the light source, and wherein the casing is in two sections **characterised in that**
one section (18) of the casing has the said one end (38) of the cable and the one part of the plug and socket connection (30) carried thereby,
and the other section (14) is removable from the said one section and carries the light source, the other part of the plug and socket connection, and the electrical connection between the light source and the said other part of the plug and socket connection.

2. A lighting unit according to claim 1 **characterised in that** the other part (14) of the casing also carries an electrically driven fan for passing cooling air over the light source, and the said other part of the plug and socket connection is also electrically connected to the fan for powering same.

3. A lighting unit according to claim 2 **characterised in that** the said one part (18) of the casing carries one end of an air duct (42), and the fan is arranged to draw air from a remote location through the duct, into the casing and pass it over the light source.

4. A lighting unit according to any of the preceding claims **characterised in that** engagement of the one part of the casing with the said other part automatically brings the light source into register with the end (38) of the optical cable and also makes the electrical connection between plug and socket.

## Patentansprüche

1. Beleuchtungseinheit, die Folgendes umfasst: ein Gehäuse (10), eine Lichtquelle in dem Gehäuse, ein Lichtwellenleiterkabel (40) mit einem Ende (38), das mit dem Gehäuse verbunden ist, um Licht von der Quelle zu empfangen und es zum anderen Ende des Kabels fern von dem Gehäuse zu leiten, ein Stromversorgungsmittel mit einer elektrischen Stecker- und Buchsenverbindung (30), von der ein Teil von dem Gehäuse getragen und an einer Stromversorgung angeschlossen und der andere Teil an der Lichtquelle angeschlossen wird, und wobei das Gehäuse in zwei Sektionen vorliegt, **dadurch gekennzeichnet, dass**
eine Sektion (18) des Gehäuses das genannte eine Ende (38) des Kabels hat und der andere Teil der Stecker- und Buchsenverbindung (30) davon getragen wird,
und die andere Sektion (14) von der genannten einen Sektion entfernbar ist und die Lichtquelle, den anderen Teil der Stecker- und Buchsenverbindung und die elektrische Verbindung zwischen der Lichtquelle und dem genannten anderen Teil der Stecker- und Buchsenverbindung trägt.

2. Beleuchtungseinheit nach Anspruch 1, **dadurch gekennzeichnet, dass** der andere Teil (14) des Gehäuses auch ein elektrisch betriebenes Gebläse zum Leiten von Kühlluft über die Lichtquelle trägt und der genannte andere Teil der Stecker- und Buchsenverbindung auch elektrisch mit dem Gebläse zum Antreiben desselben verbunden ist.

3. Beleuchtungseinheit nach Anspruch 2, **dadurch gekennzeichnet, dass** der genannte eine Teil (18) des Gehäuses ein Ende eines Luftkanals (42) trägt und das Gebläse so angeordnet ist, dass es Luft von einem entfernten Ort durch den Kanal in das Gehäuse einsaugt und sie über die Lichtquelle leitet.

4. Beleuchtungseinheit nach einem der vorherigen Ansprüche, **dadurch gekennzeichnet, dass** der Eingriff des einen Teils des Gehäuses mit dem genannten anderen Teil automatisch die Lichtquelle in Übereinstimmung mit dem Ende (38) des Lichtleiterkabels bringt und die elektrische Verbindung zwischen Stecker und Buchse herstellt.

## Revendications

1. Unité d'éclairage comprenant un boîtier (10), une source de lumière située dans le boîtier, un câble optique de transmission de lumière (40) dont l'une des extrémités (38) est connectée au boîtier afin de recevoir de la lumière à partir de la source et de la transmettre à l'autre extrémité du câble qui est distante du boîtier, un moyen d'alimentation électrique comportant une connexion électrique (30) à fiche et prise, dont une partie est portée par le boîtier et est destinée à être raccordée à une alimentation électrique, alors que l'autre partie est connectée à la source de lumière, et dans laquelle le boîtier se présente en deux sections, **caractérisée en ce que**
une section (18) du boîtier possède ladite une extrémité (38) du câble ainsi que la une partie de la connexion à fiche et prise (30) qui est portée par celle-ci,
et l'autre section (14) peut être enlevée de ladite une section, et porte la source de lumière, l'autre partie de la connexion à fiche et prise, ainsi que la connexion électrique entre la source de lumière et ladite autre partie de la connexion à fiche et prise.

2. Unité d'éclairage, selon la revendication 1, **caractérisée en ce que** l'autre partie (14) du boîtier comporte également un ventilateur à fonctionnement électrique, afin de faire passer de l'air de refroidissement au-dessus de la source de lumière, alors que ladite autre partie de la connexion à fiche et prise est également connectée, sur le plan électrique, au ventilateur afin d'assurer l'alimentation électrique de ce dernier.

3. Unité d'éclairage, selon la revendication 2, **caractérisée en ce que** ladite une partie (18) du boîtier comporte une extrémité d'une gaine d'air (42) et le ventilateur est agencé de façon à aspirer de l'air à partir d'un emplacement distant par l'intermédiaire de la gaine afin de l'amener dans le boîtier et de le faire passer au-dessus de la source de lumière.

4. Unité d'éclairage, selon l'une quelconque des revendications précédentes, **caractérisée en ce que** l'engagement de la une partie du boîtier avec ladite autre partie va automatiquement amener la source de lumière en alignement avec l'extrémité (38) du câble optique, et va également établir la connexion électrique entre la fiche et la prise.
